# EUROPEAN PATENT APPLICATION

(11) **EP 2 682 911 A1**
(43) Date of publication of application: **08.01.2014**
(21) Application number: 11859931.5
(22) Date of filing: 28.02.2011
(51) Int. Cl.: G06Q 50/00

(54) **MATERIAL MONITORING SYSTEM**

(71) Applicant: Toyota Tsusho Corporation, Aichi 450-8575 (JP)
(72) Inventor: HATTORI Makoto, Tokyo 108-8208 (JP); TAGASHIRA Masanori, Tokyo 108-8208 (JP); HIRAMATSU Dai, Tokyo 108-8208 (JP)
(74) Representative: WSL Patentanwälte Partnerschaftsgesellschaft
(86) International application number: PCT/JP2011/054484
(87) International publication number: WO 2012/117494

(57) **Abstract**

{Problem} To provide a material monitoring system whereby it is possible, in the process of biomass plastic, which is a material which is shipped from either an authorized factory or warehouse, etc., changing into a prescribed product, to monitor the change of the material at all times on the basis of the course of a prescribed number of distributions and works.

{Solution} Management information, such as weight, mass, or volume, in each nth node is transmitted at prescribed in and out timings to a central management server (1). Based on the information, the management server (1) carries out monitoring of the original material's (mass) which is presently onsite at the nth node. While material distribution elements will in reality branch off and become complex, the total quantity of the original material which the management server (1) manages (recognizes) does not change. Should an error arise in a change in the total quantity of the original material which the management server manages (recognizes), it will be possible to suspect an illicit event and to investigate the cause thereof based on the management information.

## Description

### {Technical Field}

The present invention relates to a material monitoring system that makes it possible to trace, on a worldwide scale using a relatively large-scale computer, material imparted with a certification mark that certifies that the material is an original material (e.g., biomass plastic).

### {Background Art}

An original material, e.g., biomass, "that can be recycled, that is a biologically derived organic resource, and that excludes fossil fuels" is generally referred to as biomass using a concept that expresses a quantity (mass) of a biological resource (bio). The types of biomass are wide-ranging and include waste-related biomass, plant-related biomass that is not yet widely used, and resource crops (plants cultivated for energy or for the purpose of manufacturing a product).

Examples of waste-related biomass include waste paper, livestock excrement, food waste, construction-generated wood, sawmill surplus material, black liquor (pulp factory waste fluid), sewage sludge, and human waste sludge. Examples of biomass receiving attention and for which usage is being hastened include rice straw, wheat straw, hull, woodland surplus material (thinned timber, damaged trees, and the like). Examples of energy crops include sugar cane, corn, and other saccharine-related crops, as well as rapeseed and other oilseeds.

In particular, development is currently progressing in the use of biomass plastic, which is a plant-derived raw material (for molding) having excellent heat resistance and rigidity and that makes use of the above-noted rice straw, wheat straw, hull, woodland surplus material (thinned timber, damaged trees, and the like) and other biomasses. Biomass plastics are garnering attention as high-performance environmental materials that are less reliant fewer fossil fuels and can be used in place of existing plastics.

However, biomass plastic, which makes use of the above-noted rice straw, wheat straw, hull, woodland surplus material (thinned timber, damaged trees, and the like) and other biomasses, and furthermore, sugar cane, corn, and other saccharine-related crops as well as rapeseed and other oilseeds, have a very high cost in terms of the global environment, and although more widespread use is desirable in the future, there is a problem in that the current manufacturing cost is high because, among other reasons, it is under development. Due to these circumstances, there is a movement to guarantee biomass plastic material by imparting a certification mark or the like to a final product or to the process by which biomass plastic, which is a material shipped from biomass manufacturers, is changed into a predetermined product.

However, biomass plastic, which is a material shipped from pre-certified factories or warehouses, undergoes several circulation processes or a process of change into a predetermined product. It is essentially impossible for a guaranteeing organization to trace the circulation and fabrication process. Also, it is not easy to determine with current technology whether plastic manufactured using fossil fuels has become mixed with the biomass plastic, and were such an attempt to be ventured, a costly and time consuming C14 accelerator method, a liquid scintillation method, or the like must be used by unannounced inspection and it is not possible to effectively guarantee biomass plastic material.

### {Summary Of Invention}

### {Problems To Be Solved By The Invention}

The present invention was contrived in view of such problems, it being an object thereof to provide a material monitoring system that makes it possible to constantly monitor changes in an original material shipped from a certified factory, warehouse, or the like, on the basis of a predetermined number of circulations and a course of fabrication in a process for changing the material into a predetermined product.

### {Means of Solving the Problems}

In order to achieve the above-noted object, the material monitoring system of the present invention is capable of monitoring changes in an original material shipped from a first node, on the basis of a predetermined number of circulations and a course of fabrication in a process for changing the material into a predetermined product, the material monitoring system characterized in being provided with:
first notification means by which the first node reports to a management server the amount of units of an original material shipped from the first node, a single unit being determined on the basis of a predetermined weight, mass, or volume or the like when the material is first shipped;
arrival/departure notification means for continuously reporting said unit quantity to the management server after the first notification means in a stage of arrival and departure at an Nth node, which is a standby location where said material is temporarily held for inventory or fabrication; and
a management server capable of ascertaining a unit quantity of certified material currently held at the Nth node, which is a predetermined standby location, on the basis of the unit quantity reported by the first notification means or the arrival/departure notification means.

According to the aspect described above, the weight, mass, or volume or the like, which is management information, is sent to a central management server at predetermined times of in and out in each Nth node. The management server monitors the original material (quantity, i.e., mass) currently held at an Nth node. The actual material circulation elements are deployed in a complicated and wide-ranging manner, but there is no change in the total quantity of the original material managed (recognized) by the management server. When a difference occurs in the change in the total quantity of the original material managed (recognized) by the management server, it is possible to investigate potential illicit activity or the cause of the difference on the basis of the management information.

In order to achieve the above-noted object, the material monitoring system of the present invention is characterized in that when the unit quantity of certified material currently held in the Nth node, which is a predetermined standby location, has fallen below a zero level, said management server certifies that a material for departure at the Nth node is not a certified material on the basis of the unit quantity reported by said arrival/departure notification means.

According to the aspect described above, the original material shipped from the first node flows downstream and reaches an Nth node, yet there is essentially no change in the total amount. In similar fashion, the material that has arrived at the warehouse at the Nth node will undergo no change in the amount of material that departs the warehouse as long as another material has not become mixed with the arrived material. Therefore, in the case that the unit quantity of a certified material currently held at an Nth node is less than a zero level, it is very likely than another material has been mixed with the original material, and the material departing the warehouse can be readily certified as being an uncertified material.

In order to achieve the above-noted object, the material monitoring system of the present invention is characterized in that an ID is imparted to each of said nodes, an ID is imparted for individual distribution units to the original material departing each of the nodes, and at least said node IDs and said distribution unit ID are included in a arrival/departure notification for reporting said unit quantity to the management server at the arrival and departure stages in each node.

According to the aspect described above, a management list or other database on the management server side can be readily updated in order for each node to show a node ID and report the unit quantity and distribution unit ID to the management server.

In order to achieve the above-noted object, the material monitoring system of the present invention is characterized in that the predetermined node is divided into a plurality of sub-nodes, an ID is imparted to each of said sub-nodes, an ID is imparted for individual sub-distribution units to the original material to be moved from the sub-nodes to a subsequent sub-node, and at least said sub-node IDs, said sub-distribution unit ID, and said unit quantity are reported to the management server in a stage of moving between sub-nodes.

According to the aspect described above, a node is divided into a plurality of sub-nodes in accordance with the circumstances thereof, and at least the sub-node IDs, the sub-distribution unit ID, and the unit quantity are reported to the management server in the movement stage between sub-nodes. Therefore, the original material can be managed with greater details on the management server side. For example, it is possible to collect data related to change by expansion and contraction, moisture absorption, material evaporation, and other information for consideration due to fabrication or the like.

In order to achieve the above-noted object, the material monitoring system of the present invention is characterized in that the management server holds specific percentage change information in the nodes and/or sub-nodes, and is capable of correcting error in the change in the total quantity of material in the nodes and/or sub-nodes that is lost or increased over time or by processing or fabrication.

According to the aspect described above, the management server side not only calculates the total quantity of material in each node using simple computation based on arrival and departure, but also considers data related to change by expansion and contraction, moisture absorption, material evaporation, and the like due to fabrication or the like, and is thereby able to more accurately ascertain the total quantity of material in each node.

In order to achieve the above-noted object, the material monitoring system of the present invention is characterized in that a destination node ID is included in the informational content destined for the management server in the departure notification processing.

According to the aspect described above, a destination node ID is included in the information to the management server when departure notification processing is carried out, and the management server can thereby confirm in advance the destination likely to be reached by the material, and verification work can be carried out accurately and rapidly.

In order to achieve the above-noted object, the material monitoring system of the present invention is characterized in further having lock notification processing means for reporting to the management server the distribution unit ID and a lock notification carried out by locking means for disallowing access to a material at least after the material has been stored in a transport container in departure processing at each node.

According to the aspect described above, locking means is provided to the transport container in which the material is stored, whereby switching of material between departure and arrival or other illicit activity by a person outside the system can be prevented, and the management server can ascertain the lock state by lock notification.

In order to achieve the above-noted object, the material monitoring system of the present invention is characterized in that the locking means has open notification processing means for reporting a predetermined open notification and the distribution unit ID to the management server by predetermined communication means when access to the material has been allowed.

According to the aspect described above, an open notification and distribution unit ID are sent to the management server when the material has become accessible by unlocking, whereby the management server can ascertain at anytime the arrival state, and can immediately ascertain that illicit opening has not been performed by a person outside the system.

In order to achieve the above-noted object, the material monitoring system of the present invention is characterized in that when a predetermined open notification has been sent to the management server and confirmation cannot be made that the open notification was carried out according to the node ID corresponding to the destination node, the management server certifies that the material that departed the warehouse corresponding to the distribution unit ID in the transport container is not a certified material.

According to the aspect described above, material in a transport container that has departed a warehouse is certified to be certified material only in the case that the open notification was made by the node ID of the destination node, and it is possible to determine the existence of illicit opening of the transport container at a location other than a predetermined node.

In order to achieve the above-noted object, the material monitoring system of the present invention is characterized in that a predetermined distribution line is interposed between a source node and the destination node, a line ID is imparted to each of the distribution lines, and when confirmation cannot be made that the open notification was carried out according to a node ID corresponding to said destination node, certification indicating that an interposed-line ID was the subject of illicit activity is carried out.

According to the aspect described above, ascertaining the distribution line ID makes it possible to ascertain illicit activity at locations other than the nodes and determine between which nodes the illicit activity occurred.

In order to achieve the above-noted object, the material monitoring system of the present invention is characterized in that the management server records the predetermined locking notification in departure processing, and, when a predetermined open notification is received, records the predetermined notification content and the date and time at which the notification was received.

According to the aspect described above, the time and date that transport containers were locked and the time and date of opening can be ascertained. Therefore, the shipping state in a distribution line can be ascertained.

In order to achieve the above-noted object, the material monitoring system of the present invention is characterized in that position information obtained by a GPS function is included in the open notification sent to the management server.

According to the aspect described above, it can be determined whether an open notification was made at an appropriate node on the basis of position information, and it becomes possible to discern detailed position information in the case that illicit activity has occurred and to specify and trace the illicit activity.

In order to achieve the above-noted object, the material monitoring system of the present invention is characterized in that the original material is biomass plastic, and has been certified as being substantially 100 percent pure material.

According to the aspect described above, the material monitoring system described above can reliably certify biomass plastic to be substantially 100 percent pure material.

### {Brief Description of Drawings}

FIG. 1 is a schematic view showing the configuration of the material monitoring system in an embodiment of the present invention;
FIG. 2 is a schematic view showing the interconnection of the nodes constituting the material monitoring system in an embodying example of the present invention;
FIG. 3 is a descriptive view showing an example of the relationship between the nodes and the management server in the material monitoring system in an embodiment of the present invention;
FIG. 4 is a descriptive view showing the lock notification processing means in the material monitoring system in an embodiment of the present invention;
FIG. 5 is a descriptive view showing the open notification processing means in the material monitoring system in an embodiment of the present invention;
FIG. 6 is a flowchart showing the procedure by which the management server processes notification content from a node in an embodiment of the present invention;
FIG. 7 is a flowchart showing the procedure by which the management server in an embodiment of the present invention carries out certification determination processing on the basis of notification from a node;
FIG. 8 is a diagram showing a list in which the management server in an embodiment of the present invention records notifications of locking and opening;
FIG. 9 is a diagram showing a list in which the management server in an embodiment of the present invention records notifications of arrival and departure;
FIG. 10 is a diagram showing a list in which the management server in an embodiment of the present invention records quantities of units that can depart a node; and
FIG. 11 is a diagram showing a list in which the management server in an embodiment of the present invention records notifications determined to be uncertified.

### {Description of Embodiments}

Preferred embodiments of the material monitoring system of the present invention will be described below. The material monitoring system of the embodiments will be described in relation to biomass plastic as the original material. The present embodiment is a system that makes it possible to trace, on a worldwide scale using a relatively large-scale computer, material imparted with a certification mark in order to certify that the material is substantially 100 percent pure material (e.g., biomass plastic), and is a material monitoring system that can monitor changes in the material on the basis of a predetermined number of circulations and a course of fabrication in the process in which the original biomass plastic shipped from a certified factory, warehouse, or the like (hereinafter essentially referred to as "first node") changes into a predetermined product.

Biomass plastic is very costly in terms of the environment, and although more widespread use is desirable in the future, there is a problem in that the current manufacturing cost is high because it is under development. Due to these circumstances, this material monitoring system is used in order to guarantee biomass plastic material by imparting a certification mark or the like to a final product or to the process by which biomass plastic, which is a material shipped from biomass manufacturers, is changed into a predetermined product.

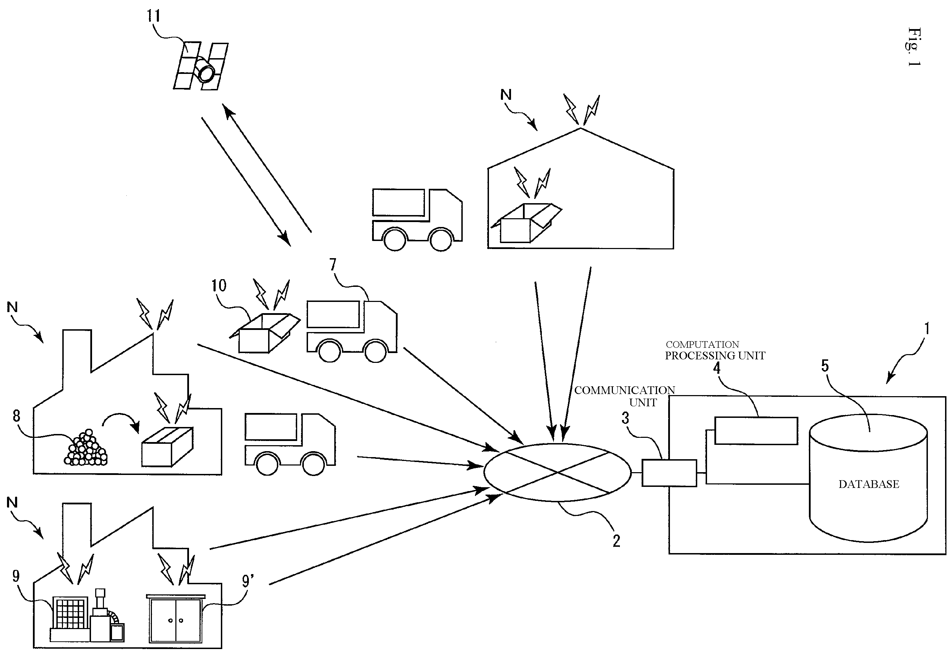

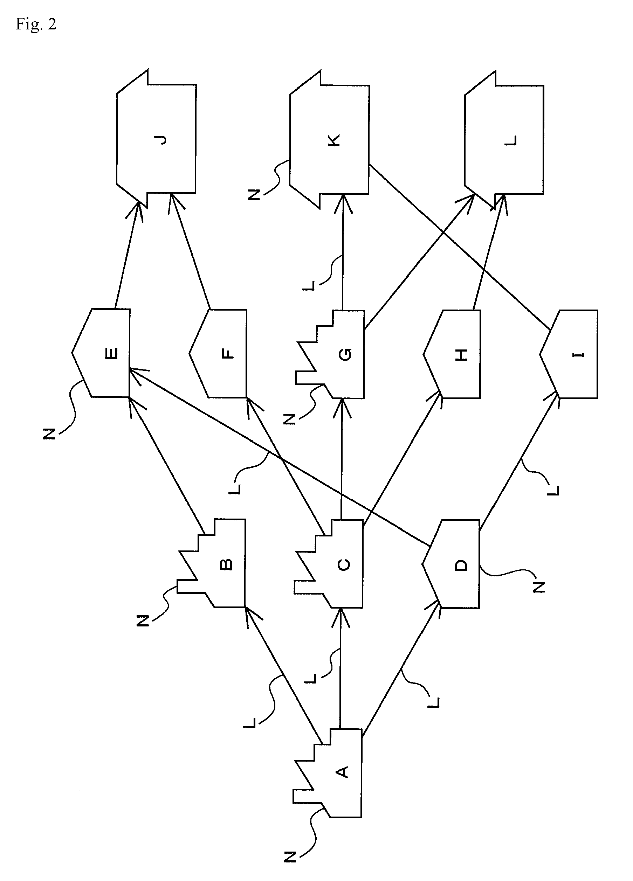

As shown in FIG. 1, biomass plastic material is carried from a pre-certified factory or warehouse (first node) to other factories, warehouses, or the like and is fabricated. The material undergoes various processing in a factory and is positioned in the factory as material inventory and preshipment inventory. In the material monitoring system in the present embodiment, the locations holding the certified material 8 are referred as nodes N, and the distribution state is referred to as line L. The biomass plastic material 8 is divided and transported to factories and warehouses (nodes N) A, B, C, D, E, ... by a transport vehicle 7 via distribution routes (line L), as shown in FIG. 2.

The configuration of the material monitoring system is described below. A management server 1 has a computation processing unit 4, a database 5, a communication unit 3, and the like. A PC or another communication device is disposed in the warehouses (nodes N) A, B, C, D, E ..., and communication is possible between the management server 1 and the communication unit 3 via an Internet communication network 2, as shown in FIG. 1. A later-described GPS function is provided to a transport container 10 for carrying the biomass plastic material 8, the GPS function being capable of gathering data about where the material is positioned using the handling circumstances of the transport container 10. The transport container 10 is also capable of communicating with the management server 1 via the Internet communication network 2.

A single unit is determined on the basis of a predetermined weight, mass, or volume or the like at the time of first shipment of an original material 8 shipped from the first node, and the first node reports the unit quantity to the management server 1. These units may include grams, kilograms, cubic milliliters, cubic meters, and the like, and the unit is selected, as appropriate, with consideration given to the state of the biomass plastic to be handled, the inspection regime, or the like. Report of the unit quantity is a first notification and is the starting point in the system.

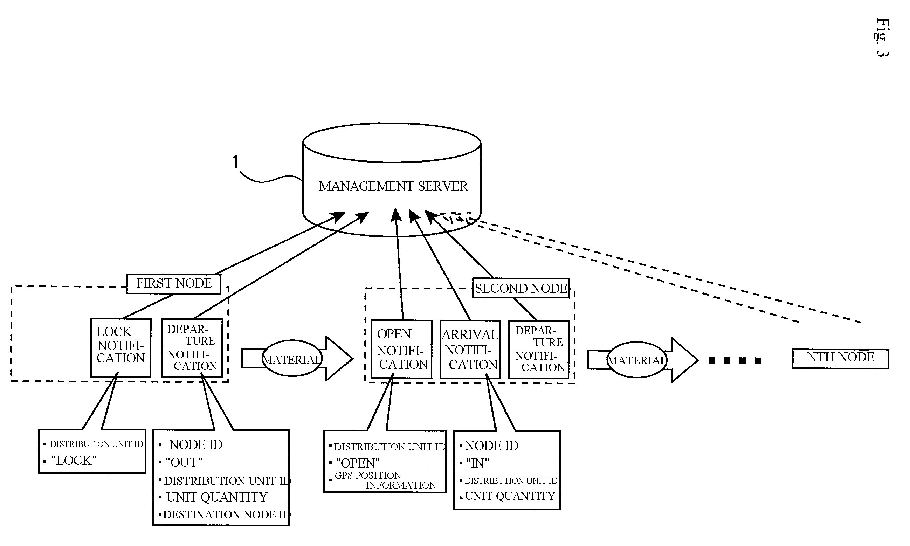

In the, e.g., the nth node of the nodes N, which are standby locations for temporarily holding the material for inventory or fabrication after the first notification, arrival/departure notifications for reporting the unit quantity to the management server 1 are carried out at the arrival and departure stages in the nth node, as shown in FIG. 3. The arrival/departure notifications are made at all nodes N at the time of arrival and departure, and the management server 1 therefore obtains continuous notifications. Consequently, the management server 1 is capable of ascertaining the unit quantity of a certified material 8 currently held at an nth node, which is a predetermined standby location, on the basis of the first notification and the unit quantity reported by the arrival/departure notifications.

The weight, mass, or volume or the like, which is management information, is sent to the central management server 1 at predetermined times of in and out in the nth nodes. Therefore, the management server monitors the (quantity, i.e., mass of) original material 8 currently held at an nth node. The material circulation elements are deployed in a complicated and wide-ranging manner, but there is no change in the total quantity of the original material 8 managed (recognized) by the management server and shipped from the first node. In other words, when an error occurs in the change in the total quantity of the original material 8 managed (recognized) by the management server 1, it is possible to ascertain or investigate possible illicit activity or the cause of the difference on the basis of the management information.

More specifically, in the case that the unit quantity of the certified material 8 currently held in, e.g., a second node, which is a predetermined standby location, has fallen below a zero level on the basis of the unit quantity reported by the arrival/departure notifications, the management server 1 certifies that the material departing the warehouse at the second node is not a certified material 8. In other words, the original material 8 shipped from the first node flows downstream and reaches an nth node, but there is essentially no change in the total amount thereof. In similar fashion, the material that has arrived at the warehouse at the nth node will undergo no change in the amount of material that departs the warehouse as long as another material has not become mixed with the arrived material. Therefore, in the case that the unit quantity of a certified material 8 currently held at the second node is less than a zero level, it is very likely that another material has been mixed with the original material 8, and the material 8 departing the warehouse can be readily certified as being an uncertified material.

Specifically, an ID is imparted to each of the nodes, an ID is imparted to each distribution unit of the original material that has departed the warehouse of each node, and at least the second node ID and the distribution unit ID are included in the arrival/departure notification for reporting the unit quantity to the management server 1 at the arrival and departure stages at each node, e.g., the second node. In other words, a management list or other database on the management server 1 side can be readily updated in order for each node to show a node ID and report the unit quantity and distribution unit ID to the management server, and the nodes N can be monitored at this time.

Various processing takes place inside a factory. In the case that the inventory area at the time of arrival, the fabrication area, and the inventory area prior to shipment exist within the factory, the predetermined node, e.g., second node is divided into a plurality of sub-nodes 9, 9', 9" ..., and an ID is imparted to each of the sub-nodes 9 (inventory area at the time of arrival), 9' (fabrication area), 9" (inventory area prior to shipment), as shown in FIG. 1. An ID is imparted to each sub-distribution unit in the original material 8 to be moved from each sub-node 9 to a subsequent sub-node 9', and at least the sub-node ID, the sub-distribution unit ID, and the unit quantity are reported to the management server 1 at the movement stage between the sub-nodes 9, 9', 9" .... In this manner, a node N is divided into a plurality of sub-nodes 9, 9', 9" ... in accordance with the circumstances thereof, and at least the sub-node IDs, the sub-distribution unit ID, and the unit quantity are reported to the management server in the movement stage between sub-nodes 9, 9', 9" ..., whereby the original material can be managed with greater detail on the management server 1 side, i.e., it is possible to collect data related to change by expansion and contraction, moisture absorption, material evaporation, and other information for consideration due to fabrication or the like.

In the case that the above-noted configuration is used, the management server 1 can hold specific percentage change information in the sub-nodes 9, 9', 9" ... without limitation to the nodes. Errors in changes in the total quantity of material that is lost or increased by passage of time or by processing or fabrication in the nodes and/or sub-nodes 9, 9', 9" ... can be corrected, and the management server 1 not only calculates the total quantity of certified material 8 in each node at that time using simple computation based on arrival and departure, but also considers data related to change by expansion and contraction, moisture absorption, material evaporation, and the like due to fabrication or the like, and is thereby able to more accurately ascertain the total quantity of certified material 8 in each node.

It is advantageous for the departure notification processing carried out by the nth node to also include in the report details to the management server 1 a destination node ID to which material is destined. In other words, including a destination node ID to the management server 1 at the time of departure notification processing makes it possible for the management server 1 to confirm in advance the destination the certified material 8 is likely to reach, and verification work can be carried out accurately and rapidly.

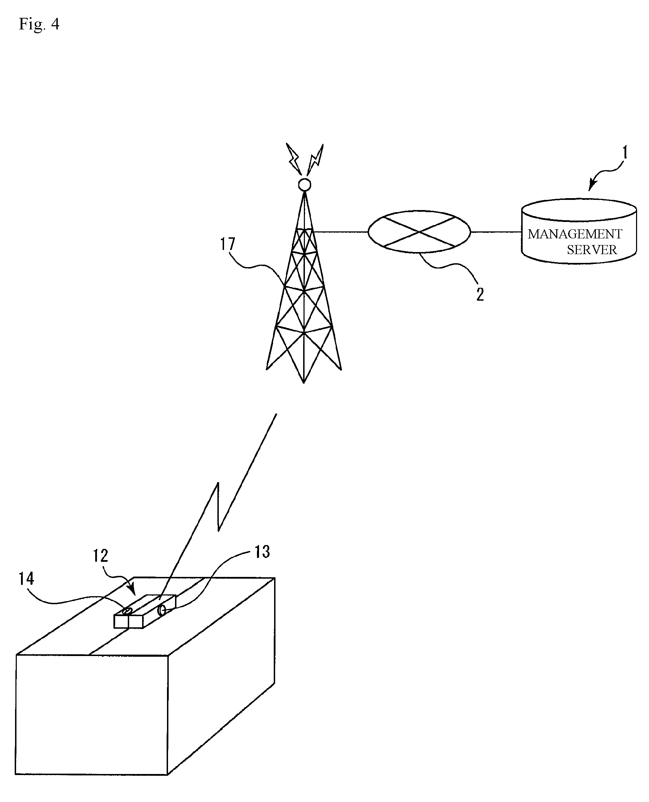

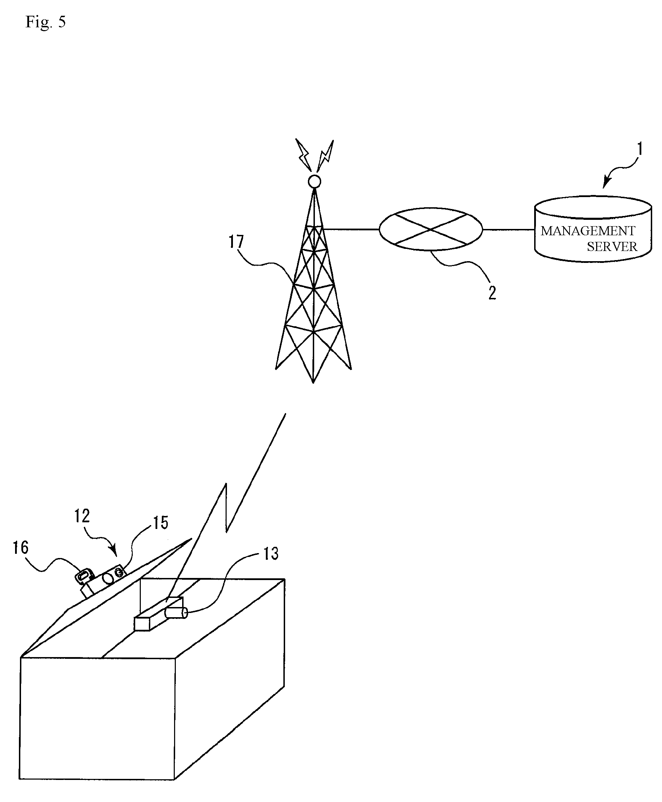

In the present embodiment, as shown in FIGS. 1, 4, and 5 in particular, locking means 12 for preventing access to the certified material 8 after the certified material 8 has been stored in the transport container 10 is provided to the transport container. The locking means 12 is not limited to a mode such as the transport container 10, and may be means for locking a container of, e.g., a transport truck 7, which is a transport vehicle. The locking means 12 has lock notification means for automatically reporting the distribution unit ID and the locking notification to the management server 1 wirelessly via a predetermined base station 17 using predetermined communication means 15 when locking has been performed. The locking means 12 is provided with a key insertion port 14, a securing cylinder section 13, communication means 15, and the like, and has open notification processing means for automatically reporting the distribution unit ID and an open notification to the management server 1 wirelessly via a predetermined base station 17 by the predetermined communication means 15 when access to the certified material 8 is made possible, i.e., when a key 16 is inserted and the locking means has been unlocked. In the case of the present embodiment, the lock notification processing means of the locking means is structured so as to process the lock notification only a single time, and after the single lock notification has been processed a single time, the lock notification process cannot be performed again. Similarly, the open notification processing means of the locking means 12 is structured so as to process the open notification only a single time, and after the single open notification has been processed a single time, the open notification process cannot be performed again. The open notification processing means may be used as notification that deems the above to be an opening when the lock is opened. In this case, the management server 1 records the predetermined locking notification in departure processing, and, when a predetermined open notification is received, records the predetermined notification content and the date and time at which the notification was received using a clock function, and ascertains the shipping state of the distribution line L.

In other words, locking means 12 is provided to the transport container 10 in which the certified material 8 is stored, and switching of the material 8 between departure and arrival or other illicit activity by a person outside the system can therefore be prevented, and the management server 1 can ascertain the lock state by lock notification. Also, an open notification and distribution unit ID are automatically sent to the management server 1 when the certified material 8 has become accessible by unlocking or the like. In particular, a GPS function is provided to the transport container 10 for carrying the biomass plastic material 8, data about where the transport container 10 is positioned can be collected, and the position information of the transport container is automatically sent together with the open notification and the distribution unit ID to the management server 1. The destination node ID to which the distribution unit ID should be delivered is reported in advance to the management server 1, and position information about where the node ID is actually positioned is registered in advance in the management server. Therefore, it can be determined whether an open notification was made at an appropriate node N on the basis of the transmitted position information, and it becomes possible to discern detailed position information in the case that illicit activity has occurred and to specify and trace the illicit activity.

As shown in FIGS. 1 and 2, a predetermined distribution line is interposed between the source node (nth node) and the destination node (nth + 1 node), a line ID is imparted to the distribution lines L as well, and it is possible to certify that an interposed-line ID is the subject of illicit activity in the case that the open notification cannot be confirmed to have been carried out by the node ID corresponding to the destination node (nth + 1 node) as described above.

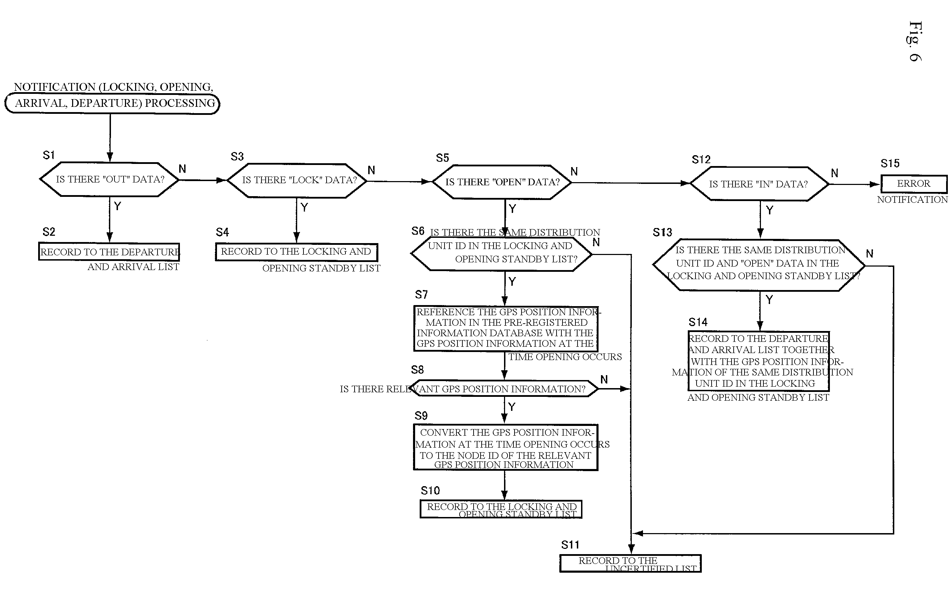

The manner in which computation processing is carried out by the management server will be described in detail below with reference to the flowchart of FIG. 6.

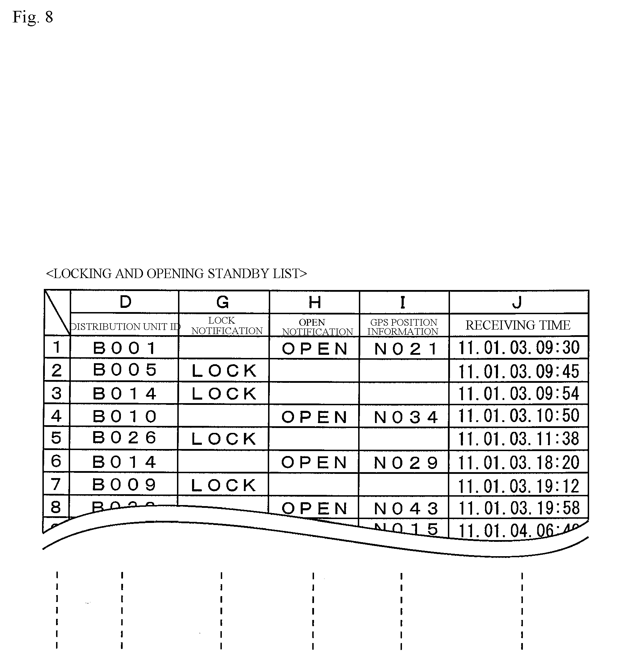

First, in step 1, in the case that "OUT" data, which is departure notification, is included in the notification, the notification content is recorded in an arrival and departure list. The process proceeds to step 3 in the case that "OUT" data is not included. It is determined whether "LOCK" data, which is lock notification, is included in the notification, and in the case that "LOCK" data is included in the notification, the notification content is recorded in the locking and opening standby list (FIG. 8). At this time, the management server records, together with the notification content, the receipt time at which the notification was received.

In the case that "LOCK" data is not included in step 3, the process proceeds to step 5 and it is determined whether "OPEN" data, which is open notification, is included in the notification. In the case that "OPEN" data is included in the notification, it is determined in step 6 whether the same distribution unit ID as that included in the notification exists in the locking and opening standby list. In the case that the same distribution unit ID exists, GPS position information included in the notification is searched from the information of each node registered in advance in the management server, and it is determined in step 8 whether the relevant GPS information exists. In the case the GPS position information exists, the GPS position information included in the notification is converted in step 9 to the node ID having the relevant GPS position information and is recorded in the locking and opening standby list.

In the case that the relevant GPS position information does not exist in step 8, there is a possibility that opening has occurred in a location not registered in advance, and the notification content is recorded in the uncertified list. Also, in the case that non-certification is determined in step 8, it is possible to record in the uncertified list the possibility that illicit activity has occurred in the line ID imparted to the distribution line that exists between the node from which the distribution unit ID included in the notification has departed and the destination node designated at the time of departure from the warehouse.

In the case that "OPEN" data is not included in the notification in step 5, the process proceeds to step 12 and it is determined whether "IN" data, which is an arrival notification, is included in the notification. In the case that "IN" data is included in the notification, it is determined in step 12 whether recorded details that include the same distribution unit ID as that included in the notification exists in the locking and opening standby list, and it is determined whether "OPEN" data is included in the same recorded details. In the case that the same distribution unit ID is included in the "OPEN" data, the notification content is recorded in the arrival and departure list together with the node ID converted from the GPS position data in step 9.

In step 13, in the case that the same distribution unit ID as that included in the notification and/or the same "OPEN" data in the recoded details is not present, there is a possibility that normal opening has not been performed prior to receipt, and the notification content is recorded in the uncertified list.

In the case that "IN" data is not included in the notification in step 12, it is determined that none among "OUT," "LOCK," "OPEN," and "IN" is included in the notification by way of steps 1, 3, and 5, the notification is determined to be unrelated to notification processing, and an error notification is made and recorded to retain the details thereof.

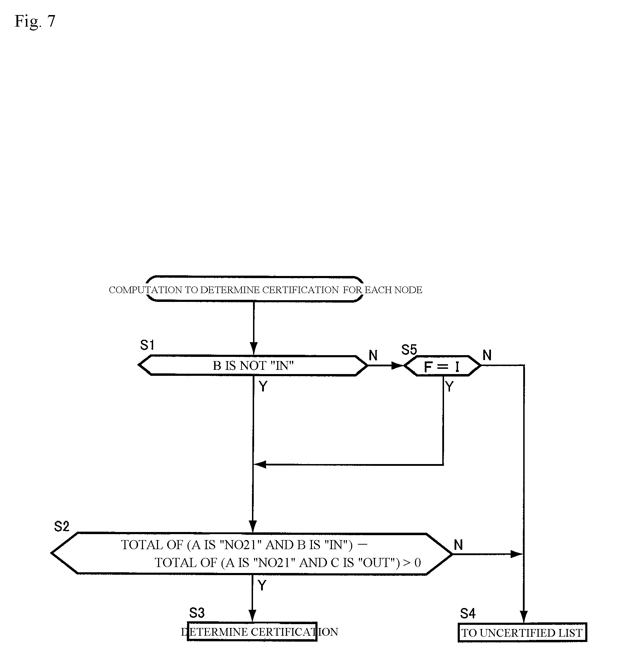

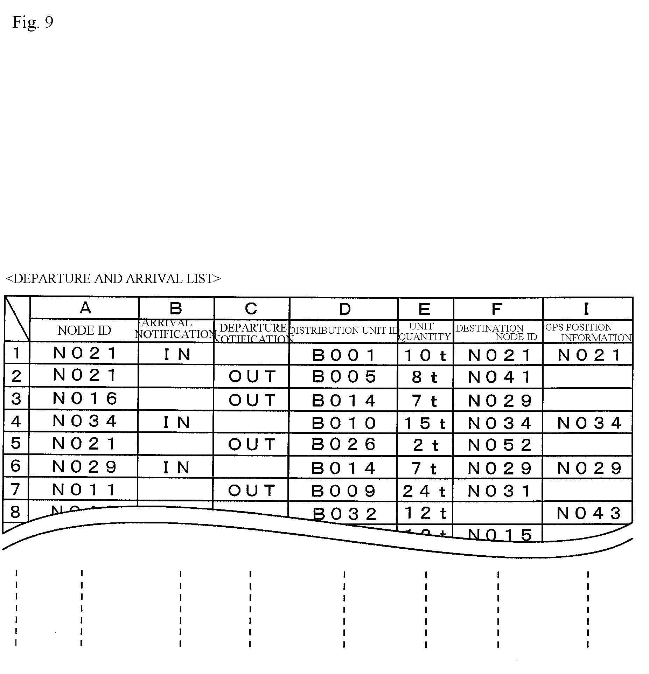

Next, it is determined by way of the above-noted series of steps whether illicit activity has occurred on the basis of the total quantity of arriving/departing units from the arrival/departure notification recorded in the arrival and departure list and by individual node certification and determination processing (FIG. 7). For example, when confirmation is to be made as to whether illicit activity has occurred in node ID "NO21" recorded in column A in FIG. 9, it is first determined by step 1 whether "IN" is included in column B, and in the case that "IN" is not included in column B, the unit quantity recorded in column E of the row found using the same conditions is totaled in row units in the list in step 2 in the case that "NO21" is in column A and "IN" is in column B; and similarly, the unit quantity recorded in column E of the row found using the same conditions is totaled in row units in the list in the case that "NO21" is in column A and "OUT" is in column B. The unit quantity total of "OUT" is subtracted from the unit quantity total of "IN," and certification of the material is made when the result is less than zero.

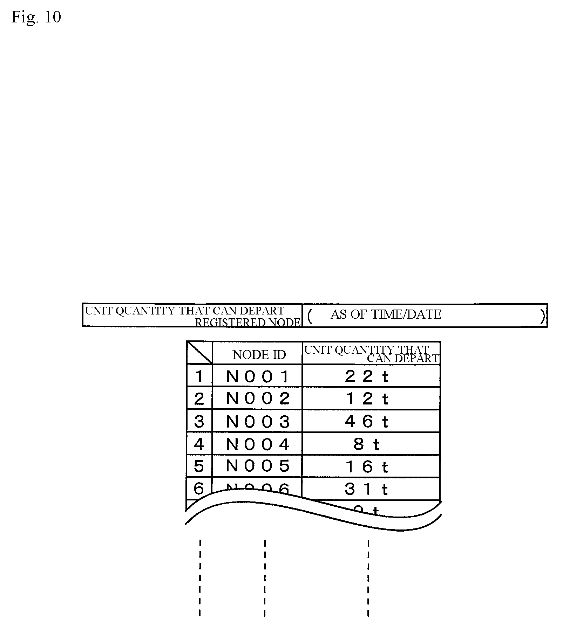

At this time, the management server secures and ascertains specific percentage change information in advance as data in the nodes and sub-nodes, and is capable of correcting errors in changes in the total quantity of material that is lost or increased by passage of time or by processing or fabrication in the nodes and/or sub-nodes. The quantity of units that can depart in each node is recorded and made into a list, as shown in FIG. 10.

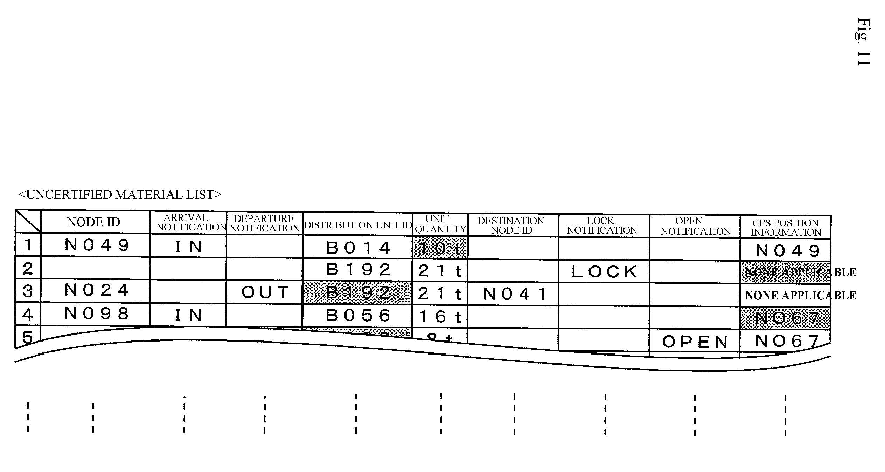

In the case that "IN" is included in column B in step 1, the process proceeds to step 5, and it is determined whether there is match between the destination node ID recorded in column F and the node ID converted from GPS position information recorded in column I. The process proceeds to step 2 in the case that there is match between the destination node ID and the node ID converted from GPS position information. In step 5, it is determined that arrival occurred at a node ID different from the destination node ID designated at the time of departure and that normal distribution rules have not been followed in the case that there is no match between the destination node ID and the node ID converted from GPS position information. The notification content is recorded in the uncertified list, as shown in FIG. 11.

The results of the material monitoring system described above are used in real time, and the level of purity of the biomass plastic material retained in the node IDs and line IDs is managed, making it possible to impart a certification mark or the like to the process by which biomass plastic, which is a material shipped from pre-certified factories or warehouses (first node) to other factories, warehouses, and the like, is changed into a predetermined product, or to the final product to accurately guarantee the biomass plastic.

A scheme is adopted in which, even in the event that plastic manufactured using fossil fuels becomes mixed with the biomass plastic, the total quantity of units of the certified material that can depart is ascertained at a current time point by the material monitoring system, and certified material verification marks exceeding the unit quantity of certified materials that can depart will be forbidden from being supplied. Therefore, there is no advantage in mixing plastic manufactured using fossil fuels with biomass plastic, and biomass plastic material can be guaranteed in an effective manner. In other words, it is possible to prevent certified material verification marks from being oversupplied, and prevent illicit activities such as illicit use of the certified material verification marks.

The present invention was described above with reference to the drawings, but the present invention is not limited to these embodiments, it being apparent that modifications and additions that are within spirit of the present invention are also included in the present invention.

### {Reference Signs List}

- 1: Management server
- 2: Internet communication network
- 8: Certified material
- 9, 9', 9": Sub-node
- 10: Transport container
- 11: GPS
- 12: Locking means
- 15: Communication means
- N: Node
- L: Line

## Claims

1. A material monitoring system capable of monitoring changes in an original material shipped from a first node, on the basis of a predetermined number of circulations and a course of fabrication in a process for changing said material into a predetermined product, the material monitoring system **characterized in** being provided with:
first notification means by which said first node reports to a management server the amount of units of an original material shipped from the first node, a single unit being determined on the basis of a predetermined weight, mass, or volume or the like when the material is first shipped;
arrival/departure notification means for continuously reporting said unit quantity to the management server after the first notification means in a stage of arrival and departure at an Nth node, which is a standby location where said material is temporarily held for inventory or fabrication; and
a management server capable of ascertaining a unit quantity of certified material currently held at the Nth node, which is a predetermined standby location, on the basis of the unit quantity reported by said first notification means or said arrival/departure notification means.

2. The material monitoring system according to claim 1, **characterized in that** when the unit quantity of certified material currently held in the Nth node, which is a predetermined standby location, has fallen below a zero level, said management server certifies that a material for departure at the Nth node is not a certified material on the basis of the unit quantity reported by said arrival/departure notification means.

3. The material monitoring system according to claim 1 or 2, **characterized in that** an ID is imparted to each of said nodes, an ID is imparted for individual distribution units to the original material departing each of the nodes, and at least said node IDs and said distribution unit ID are included in an arrival/departure notification for reporting said unit quantity to the management server at the arrival and departure stages in each node.

4. The material monitoring system according to claim 3, **characterized in that** said predetermined node is divided into a plurality of sub-nodes, an ID is imparted to each of said sub-nodes, an ID is imparted for individual sub-distribution units to the original material to be moved from the sub-nodes to a subsequent sub-node, and at least said sub-node IDs, said sub-distribution unit ID, and said unit quantity are reported to the management server in a stage of moving between sub-nodes.

5. The material monitoring system according to claim 4, **characterized in that** the management server holds specific percentage change information in the nodes and/or sub-nodes, and is capable of correcting error in the change in the total quantity of material in the nodes and/or sub-nodes that is lost or increased over time or by processing or fabrication.

6. The material monitoring system according to claim 3, **characterized in that**, in order to achieve the above-noted object, the material monitoring system of the present invention includes a destination node ID in the informational content destined for the management server in said departure notification processing.

7. The material monitoring system according to claim 6, **characterized in** further having lock notification processing means for reporting to the management server the distribution unit ID and a lock notification carried out by locking means for disallowing access to a material at least after the material has been stored in a transport container in departure processing at each node.

8. The material monitoring system according to claim 7, **characterized in that** said locking means has open notification processing means for reporting a predetermined open notification and the distribution unit ID to the management server by predetermined communication means when access to the material has been allowed.

9. The material monitoring system according to claim 8, **characterized in that** when a predetermined open notification has been sent to the management server and confirmation cannot be made that the open notification was carried out according to the node ID corresponding to said destination node, said management server certifies that the material that departed the warehouse corresponding to the distribution unit ID in said transport container is not a certified material.

10. The material monitoring system according to claim 9, **characterized in that** a predetermined distribution line is interposed between a source node and the destination node, a line ID is imparted to each of the distribution lines, and when confirmation cannot be made that the open notification was carried out according to a node ID corresponding to said destination node, certification indicating that an interposed-line ID was the subject of illicit activity is carried out.

11. The material monitoring system according to any of claims 7 to 10, **characterized in that** the management server records the predetermined locking notification in departure processing, and, when a predetermined open notification is received, records the predetermined notification content and the date and time at which the notification was received.

12. The material monitoring system according to any of claims 7 to 11, **characterized in that** position information obtained by a GPS function is included in the open notification sent to the management server.

13. The material monitoring system according to any of claims 1 to 10, **characterized in that** said original material is biomass plastic, and has been certified as being substantially 100 percent pure material.
